# EUROPEAN PATENT APPLICATION

(11) **EP 0 938 847 A1**
(43) Date of publication of application: **01.09.1999**
(21) Application number: 98200220.6
(22) Date of filing: 27.01.1998
(51) Int. Cl.: A23G 3/20, A23P 1/12, A23P 1/10, A23C 19/16

(54) **A process for the preparation of a chilled product**

(71) Applicant: SOCIETE DES PRODUITS NESTLE S.A., 1800 Vevey (CH)
(72) Inventor: The designation of the inventor has not yet been filed
(74) Representative: Thomas, Alain

(57) **Abstract**

The invention concerns a process for the preparation of a chilled product having a filling and a coating, the process comprising:
i) disposing the filling and the coating each in a separate hopper,
ii) separately dosing the filling and the coating each into a separate piston chamber,
iii) simultaneously feeding the coating from its chamber to the outer conduit of a concentric nozzle, and the filling from its chamber to the central conduit of the nozzle,
iv) dosing the coating, then the coating and the filling together and finally the coating into a mould, and
v) repeating the process for another chilled product.

## Description

The invention concerns a process for the preparation of a chilled product comprising a filling and a coating.

The preparation of a product comprising a filling and a coating is already known in the confectionary area. This preparation is based on the "one shot technology" as described in the US Patent No. 1'711'750. However, these confectionary products have low water activity and hence problems of microbial contaminant rarely arise. A problem however, arises if it is desired to produce products which have a higher water activity.

The aim of the present invention is to provide a process which can be implemented with products having a high water activity, that is products which have to be kept under chilled conditions.

The present invention concerns a process for the preparation of a chilled product having a filling and a coating, the process comprising:
i) disposing the filling and the coating each in a separate hopper,
ii) separately dosing the filling and the coating each into a separate piston chamber,
iii) simultaneously feeding the coating from its chamber to the outer conduit of a concentric nozzle, and the filling from its chamber to the central conduit of the nozzle,
iv) dosing the coating, then the coating and the filling together and finally the coating into a mould, and
v) repeating the process for another chilled product.

For the implementation of the process according to the invention, a one-shot machine which fulfills the requirements of production of a chilled product may be used. The machine can be used per se, but the dosing means has to be redesigned to improve its cleanability and sanitation, so that the machine can be wet cleaned and sanitized.

The chilled products obtained normally have a shelf life of around 6 weeks under chilled conditions, that is kept in a fridge at a temperature of around 4 to 12 °C.

The filling is the critical component concerning the shelf life. This filling may be a milk or water or fruit based component, which is whipped or unwhipped. This milk-based component is selected in the group consisting of fresh cheese, yoghurt and milk product . Under milk product, we understand a milk- or milk powder-containing product, for example a mousse and a cream dessert.

Due to hygienic reasons, the filling preferably has an acidic pH of 3 to 4.5. It is also possible to have a filling with a neutral pH, for example a mousse or a cream dessert. The fillings used are produced with standard procedures.

The coating may be a fat-based product, for example a product containing at least 20 % of cocoa butter. It is also possible according to the invention to have as coating a water continuous phase, such as a jelly.

When the chilled product is in the mould, it is subjected directly to a temperature of around 4-16 °C, already on the production line. It is possible to have several nozzles producing the chilled product : the number of the nozzles is not critical.

The specificity of the invention is to dose simultaneously the filling and the coating. The coating is dosed via the outer conduit of a concentric nozzle whilst the filling is deposited down the inner conduit of the nozzle. The dosing sequence requires the coating to be deposited first, followed after a set time by the filling. The filling and the coating are deposited together and form a centre of filling surrounded by the coating. After a further selected time, the depositing of the filling stops and the coating completes the shell.

The advantage of the one shot technology is that it offers the possibility to manufacture a product which is entirely surrounded by a coating (shell) which is dosed simultaneously with the filling. This minimizes the risk of recontamination of the filling as the filling is protected against environmental influences from the beginning of the process.

On the production line, the product is then either pushed out of the mould and filled in a pouch, wherein it is possible to enclose ten or twenty of these products or directly put in a pouch with the mould with the above mentioned number of products. The pouch is then sealed and ready to be placed in the fridge.

Any micro-organisms in the fat-based coating alone will not grow due to the low water activity. In the present case, a dairy product is used as filling (having a high water activity value) together with the coating (for example chocolate). So, if the coating is not pasteurized or sterilized before its use in the chilled product , microorganisms could grow at the interface between the chocolate and the filling or on the outside of the chocolate shell due to water droplets forming during storage. Since a dairy filling with a low pH value is being filled, it is sufficient to pasteurize the coating. The coating is pasteurized before it is fed in the hopper for example with scrape surface heat exchangers.

The dairy filling can also be heat-treated before the feeding in the hopper. This heat-treatment is either a pasteurisation or a sterilisation.

In the hopper, the temperature of the coating is adjusted such that the coating is sufficiently flowable to reach the nozzle. This temperature is 15 to 60 °C, preferably 20 to 45 °C and most preferably 26 to 30 °C. Concerning the dairy filling, it is maintained in the hopper at a temperature of 0 to 20 °C, preferably 16 to 20 °C.

The "one-shot" machine for the implementation of the process according to the invention is illustrated in the following figure, showing schematically how it operates.

A dairy filling (1) which has been parteurised is fed into a hopper (2), where it is kept at a temperature of around 16 °C. A fat-based coating (3), after being pasteurised, is fed into a hopper (4) and kept at a temperature of around 28 °C. Both hoppers are disposed in an enclosure (5) for maintaining the appropriate temperature : moreover, each hopper is separated from the other by a wall (6). A piston (7) draws the filling into a chamber (8) and a piston (9) draws the coating into a chamber (10). The pipes (11), (12) connect each hopper (1,4) to the corresponding chamber (8,10). A dosing nozzle (13) receives the charges of filling and coating. A conveying belt (14) is disposed below the nozzle (13) and feeds the moulds (15) with the chilled product (16).

This "one shot machine" operates as described hereunder:
The filling (1) and the coating (3) in their corresponding hoppers at the prescribed temperature are ready for the process, the different heat-treatments having been made. The piston (7) moves outward along arrow A and draws a quantity of filling for one product. The same occurs for the coating with piston (9) moving outward along arrow B. The pipes (11) and (12) then rotate downwards according to arrows C and D and are then in a position to be fed to the nozzle (13) by inward movement of the pistons (7) and (9): the filling being fed into the centre of the nozzle and the coating being fed into the periphery of the nozzle. The dosing in the mould (15) is then made by moving downwards the whole machine along the arrow F and the pipes (11) and (12) move upwards to their original position. Another dosing can then start again.

The description is now made in relation with an example.

### Example : Fresh cheese

A chilled product is prepared according to the process described hereabove. The filling used has following composition :
- Curd: 52.9 %
- Cream: 20.5 %
- Sugar: 15 %
- Fruit preparation: 8.5 %
- Skimmed milk powder: 2.5 %
- Gelatine: 0.6 %

The coating has following composition :
- Sugar: 41 %
- Milk powder: 29 %
- Lactose: 5 %
- Cacao butter: 24 %
- Lecithin: 0.7 %
- Flavour: 0.3 %

The obtained product can be kept in the fridge for 6 weeks, without any microbiological growth and preserving satisfying organoleptic properties.

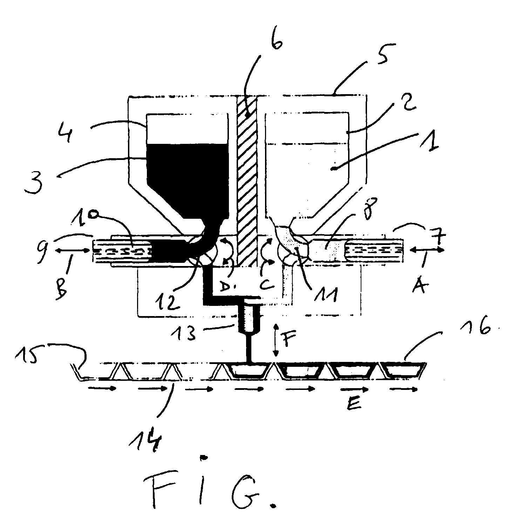

## Claims

1. A process for the preparation of a chilled product having a filling and a coating, the process comprising:
i) disposing the filling and the coating each in a separate hopper,
ii) separately dosing the filling and the coating each into a separate piston chamber,
iii) simultaneously feeding the coating from its chamber to the outer conduit of a concentric nozzle, and the filling from its chamber to the central conduit of the nozzle,
iv) dosing the coating, then the coating and the filling together and finally the coating into a mould, and
v) repeating the process for another chilled product.

2. A process according to claim 1, wherein the filling is selected from the group consisting of milk-, water- and fruit-based component, which is whipped or unwhipped.

3. A process according to claim 2, wherein the milk-based component is selected from the group consisting of fresh cheese, yoghurt and milk product.

4. A process according to claims 1 or 2, wherein the coating is a fat-based product.

5. A process according to any of claims 1 to 3, wherein the coating is disposed in the hopper at a temperature of 15 to 60 °C and the filling at a temperature of 0 to 20 °C.

6. A process according to any of claims 1 to 4, wherein the coating and the filling are heat-treated prior to step i).
